# FASCICULE DE BREVET EUROPEEN

(11) **EP 0 604 892 B1**
(45) Date de publication et mention de la délivrance du brevet: **23.10.1996**
(21) Numéro de dépôt: 93120665.0
(22) Date de dépôt: 22.12.1993
(51) Int. Cl.: G01S 7/52, G01N 29/10

(54) **Appareil de mesure par ultrasons ayant un contrôle de gain ajustable**
Ultraschallmessgerät mit Regelung des Verstärkungsfaktors
Ultrasonic measurement apparatus with adjustable gain control

(30) Priorité: 29.12.1992 FR 9215987
(43) Date de publication de la demande: 06.07.1994
(73) Titulaire: ASULAB S.A., CH-2501 Bienne (CH)
(72) Inventeur: Daniel, Etienne, CH-2206 Les Geneveys-sur-Coffrane (CH)
(74) Mandataire: de Montmollin, Henri

(56) Documents cités:
- WO-A-90/02346
- US-A- 4 008 713
- US-A- 4 420 824
- US-A- 4 451 797

## Description

La présente invention concerne généralement des appareils de mesure par ultrasons comprenant un transducteur pour émettre une impulsion ultrasonore à une fréquence de répétition prédéterminée et pour recevoir des échos réfléchis par une pluralité d'interfaces, un circuit émetteur pour contrôler l'émission des impulsions ultrasonores, un circuit récepteur pour produire un signal d'écho représentatif des échos produits par chaque impulsion, des moyens de contrôle de gain pour contrôler l'amplitude des signaux d'échos, et des moyens de traitement pour recevoir et traiter lesdits signaux d'échos.

L'invention est apte à être utilisée dans des applications médicales et peut être utilisées, par exemple, dans des appareils de mesure par ultrasons qui suivent le mouvement temporel de la position des parois antérieures et postérieures d'un vaisseau sanguin afin de déterminer les variations du diamètre intérieur et de l'épaisseur des parois du vaisseau sanguin en fonction du temps. Bien que l'invention va être décrite dans le cadre de cette application, on comprendra que l'invention n'est pas limitée à celle-ci et qu'elle peut par exemple être utilisée pour la mesure de l'épaisseur de la lentille cornéenne ou pour des mesures non invasives d'autres organes du corps. L'invention peut être également utilisée dans des applications non médicales nécessitant la mesure d'épaisseur de paroi et/ou de diamètre intérieur tel que dans le contrôle non destructif de tuyaux.

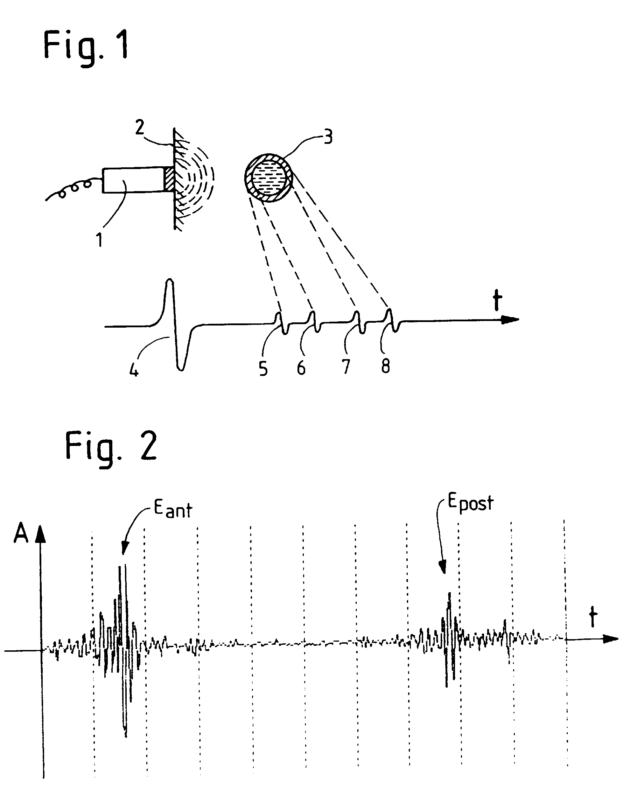

La figure 1 représente schématiquement une façon classique de mesurer la position des parois d'un vaisseau sanguin. Cette figure montre un transducteur ultrasonore 1 disposé sur la peau 2 d'un sujet. Le transducteur 1 se trouve devant une artère 3 représentée en coupe. Le transducteur 1 est contrôlé par un circuit électronique afin d'émettre une impulsion ultrasonore 4, de recevoir des échos ultrasonores résultant de la réflexion de cette impulsion sur les interfaces artères-tissus et artèressang, et de créer un signal d'écho en réponse à celle-ci. Selon la fréquence du transducteur ultrasonore, ce signal d'écho peut comprendre quatre échos distincts 5, 6, 7 et 8 ou seulement deux échos correspondant respectivement à une combinaison des échos 5 et 6 et à une combinaison des échos 7, 8.

Le mouvement de chaque interface est déterminé de la manière suivante. Le transducteur émet une impulsion 4 à une fréquence de répétition comprise généralement entre 10 Hz et 5 kHz. Afin de suivre la position des échos qui sont détectés par le transducteur après un retard qui dépend de la position de chaque interface, une fenêtre temporelle de dimension déterminée est utilisée pour définir un intervalle de temps au cours duquel les échos sont attendus, et qui est ajustée, après chaque cycle, afin que les échos soient détectés au centre de cette fenêtre si les interfaces étaient immobiles.

La connaissance de la position temporelle de chaque interface ainsi que la connaissance de la vitesse de propagation de l'impulsion dans le sang et dans le tissu, permet, en mesurant l'intervalle, de déterminer la variation de diamètre intérieur et la variation de l'épaisseur des parois antérieures et postérieures du vaisseau sanguin 3 en fonction du temps.

La figure 1 est une représentation schématique. En pratique, les échos résultant de la réflexion d'une impulsion sur les parois antérieures et postérieures du vaisseau sanguin 3 ne sont pas si pures, mais présentent une forme bien plus complexe comme cela est représenté par les échos élémentaires Eₐₙₜ et Eₚₒₛₜ à la figure 2. Cette déformation provient du fait que l'impulsion ultrasonore traverse des tissus ayant des caractéristiques différentes et du fait que l'interface entre la paroi d'un vaisseau sanguin et le tissu environnant n'est pas aussi bien définie que, par exemple, l'interface entre une plaque de métal et l'air environnant.

La position des interfaces engendrant ces échos, notamment dans le domaine médical, ne peut par conséquent pas être directement et automatiquement déterminée à partir de la forme du signal d'écho.

Différentes techniques peuvent être utilisées pour détecter la position d'interfaces mobiles.

Selon une première technique, la position des interfaces est déterminée manuellement. L'utilisateur affiche le signal d'écho sur un oscilloscope ou d'autres moyens d'affichage et choisit un point particulier sur le signal d'écho sur lequel le suiveur d'échos doit être verrouillé. Une deuxième technique consiste à traiter le signal d'écho afin de supprimer le bruit, en gardant seulement la partie du signal provenant de la réflexion du signal ultrasonore sur cinq interfaces. Selon cette technique, les signaux d'échos devant être étudiés sont tout d'abord numérisés et mémorisés en temps réel, et ensuite traités ultérieurement.

La demande de brevet suisse N^{o} 2 871/91 = EP-A-534217 décrit une troisième technique selon laquelle un appareil de mesure par ultrasons émet une première impulsion ultrasonore en direction d'un vaisseau sanguin, transforme le signal d'écho créé à partir des échos détectés par le transducteur en une série de valeurs numériques (créées pendant l'ouverture de la fenêtre temporelle) qui sont alors mémorisées. Dans une étape d'initialisation, ces valeurs numériques mémorisées sont traitées afin de sélectionner un point de référence dans chaque écho élémentaire du signal d'écho, pour déterminer pour chaque écho élémentaire la position temporelle de chaque interface produisant cet écho élémentaire et pour calculer pour chaque écho élémentaire l'intervalle temporel entre la position du point de référence de cet écho élémentaire et la position temporelle de l'interface obtenue par le traitement.

En parallèle à ce traitement, une phase d'assimilation se déroule selon laquelle les valeurs numériques provenant de la détection des signaux d'échos d'impulsions ultrasonores ultérieures sont traitées afin de suivre la position temporelle des points de référence provenant de chaque signal d'écho. Il s'en suit alors une phase d'acquisition au cours de laquelle la position temporelle de chaque interface correspondant à chaque écho élémentaire des signaux d'échos provenant des impulsions ultrasonores ultérieures à la phase d'assimilation sont suivis et mis en mémoire. Enfin, au cours d'une étape d'exploitation, les données mémorisés au cours de la phase d'acquisition sont utilisées pour fournir des informations à l'utilisateur telles que l'affichage du diamètre du vaisseau sanguin en fonction du temps.

On remarque que l'analyse précise de la forme de chaque signal d'écho, et en particulier de la forme de ses échos élémentaires, est une partie importante de chacune des techniques décrites ci-dessus.

Toutefois, comme cela est représenté à la figure 2, la précision de cette analyse est perturbée par le fait que l'écho élémentaire Eₚₒₛₜ a généralement une amptitude plus faible que celle de l'écho élémentaire Eₐₙₜ.

Cette différence est due, d'une part, au fait que la paroi postérieure du vaisseau sanguin 3 est plus éloignée du transducteur 1 que la paroi antérieure, et d'autre part, à des erreurs d'alignement du transducteur 1 avec les surfaces réfléchissantes du vaisseau sanguin 3. Il résulte de ce qui précède que les échos peuvent se réfléchir en dehors de la zone sensible du transducteur.

Par conséquent, il est souhaitable de réaliser un système de mesure ultrasonore fournissant des caractéristiques qui peuvent être ajustées afin d'optimiser l'amplitude d'un premier écho élémentaire et qui peut être modifié pour être mis dans des conditions optimums pour un deuxième écho élémentaire.

Le brevet américain 4 451 797 décrit un contrôleur automatique de gain (CAG) pour un système pulsé utilisé dans le contrôle non-destructif de parois de tuyau. Dans ce système de contrôle par ultrasons décrit dans ce document, un transducteur émet une impulsion ultrasonore et reçoit les échos provenant des surfaces proches et éloignées du tuyau. Un amplificateur CAG est relié au transducteur et produit un signal d'écho représentatif des échos reçus par le transducteur. Suite à l'émission de l'impulsion, un premier circuit est relié à la sortie de l'amplificateur CAG. Quand l'écho provenant de la paroi proximale du tuyau est reçu, la grandeur du signal d'écho est comparée à une tension de référence et la différence est utilisée pour ajuster l'amplification de l'amplificateur CAG. L'amplitude de la partie du signal d'écho correspondant à l'écho provenant de la paroi proximale est ainsi optimisée.

Après la réception de l'écho provenant de la paroi proximale, mais avant la réception de l'écho provenant de la paroi distale, un deuxième circuit est relié à la sortie de l'amplificateur CAG. Quand ce dernier écho est reçu par le transducteur, la grandeur du signal d'écho est comparée à une tension de référence différente, la différence étant utilisée pour ajuster l'amplification de l'amplificateur CAG à un nouveau niveau. L'amplitude de la partie du signal d'écho correspondant à l'écho provenant de la paroi distale est ainsi également optimisée.

Dans ce contrôleur automatique de gain, l'amplification de chaque signal d'écho (provenant d'une seule impulsion ultrasonore) est ajustée entre la réception de l'écho de la paroi proximale et l'écho de la paroi distale. Toutefois, dans de nombreuses applications, ce type d'ajustement du gain n'est pas possible comme cela est le cas lorsque le mouvement temporel de la position des parois d'un vaisseau sanguin est suivi.

En raison des propriétés capacitives et inductives inhérentes à tout circuit de contrôle de gain, un certain temps d'ajustement est nécessaire si l'amplification d'un signal doit être changé. Il s'est révélé expérimentalement que pour de nombreux circuits d'amplification, un temps d'ajustement de plusieurs microsecondes est nécessaire. Les ondes ultrasonores se propagent dans un sujet à une vitesse de l'ordre de 1'540 mètres par seconde. Alors que les artères fémorale ou carotide ont un diamètre d'environ 1 cm, d'autres artères humaines peuvent avoir des diamètres de 4 mm de sorte que dans ce dernier cas, les échos élémentaires Eₐₙₜ et Eₚₒₛₜ sont séparés uniquement de 5,2 µsec pour une artère immobile. Puisque les artères des patients ne sont pas immobiles, mais en fait se déplacent entre les impulsions provenant du transducteur, le temps entre le moment calculé auquel le gain du transducteur doit être ajusté et le moment réel auquel l'écho provenant de la paroi postérieur du vaisseau sanguin 3 est reçu est en fait inférieur à celui indiqué plus haut. On peut ainsi remarquer qu'en utilisant le système de contrôle de gain décrit ci-dessus, le temps disponible entre les échos élémentaires au cours duquel on peut changer l'amplitude du signal d'écho est insuffisant.

L'invention a donc pour but de fournir un appareil de mesure par ultrasons qui pallie les inconvénients de l'art antérieur.

A cet effet, la présente invention fournit un appareil de mesure par ultrasons comprenant un transducteur pour émettre une impulsion ultrasonore à une fréquence de répétition prédéterminée et pour recevoir des échos réfléchis par une pluralité de groupe d'interfaces, un circuit émetteur pour contrôler l'émission desdites impulsions ultrasonores, un circuit récepteur pour produire un signal d'écho représentatif desdits échos produits par chacune desdites impulsions, chacun desdits signaux d'écho ayant une première partie correspondant aux échos provenant d'un premier groupe d'interfaces et une deuxième partie correspondant aux échos provenant d'un autre groupe d'interfaces, des moyens de contrôle de gain pour contrôler l'amplitude de chacun desdits signaux d'écho, des moyens de traitement pour recevoir et traiter lesdits signaux d'écho, caractérisé en ce que lesdits moyens de traitement sont adaptés pour traiter la première partie d'un premier signal d'écho et la deuxième partie d'un signal d'écho ultérieur, lesdits moyens de contrôle de gain étant aptes à ajuster l'amplitude dudit premier signal d'écho à une première valeur et l'amplitude dudit signal d'écho ultérieur à une deuxième valeur de sorte que l'on optimise l'amplitude à la fois de la première partie dudit premier signal d'écho et de la deuxième partie dudit signal d'écho ultérieur dans lesdits moyens de traitement.

L'amplitude des échos élémentaires Eₐₙₜ et Eₚₒₛₜ peuvent ainsi tous les deux être optimisés de cette façon permettant un temps d'ajustement suffisant pour les moyens de contrôle de cette amplitude.

La description qui suit se réfère plus en détail à différentes caractéristiques de l'appareil de mesure par ultrasons de la présente invention. Afin de faciliter la compréhension de la présente invention, on fera référence à la description qui suit en liaison avec les dessins annexés dans lesquels l'appareil de mesure par ultrasons est illustré dans un mode de réalisation préféré. On comprendra bien entendu que l'appareil de mesure par ultrasons de la présente invention n'est pas limité au mode de réalisation préféré illustré dans les dessins dans lesquels :
La figure 1, déjà décrite, montre le principe de mesure par ultrasons de la position des interfaces des parois antérieure et postérieure d'un vaisseau sanguin;
La figure 2, déjà décrite, montre la forme temporelle d'un signal d'écho représentant deux échos élémentaires produits par les parois antérieures et postérieures d'un vaisseau sanguin;
La figure 3 montre un mode de réalisation schématique d'un appareil de mesure par ultrasons selon la présente invention; et
La figure 4 montre un schéma d'un circuit d'un mode de réalisation du circuit de réception de l'appareil de mesure par ultrasons de la figure 3.

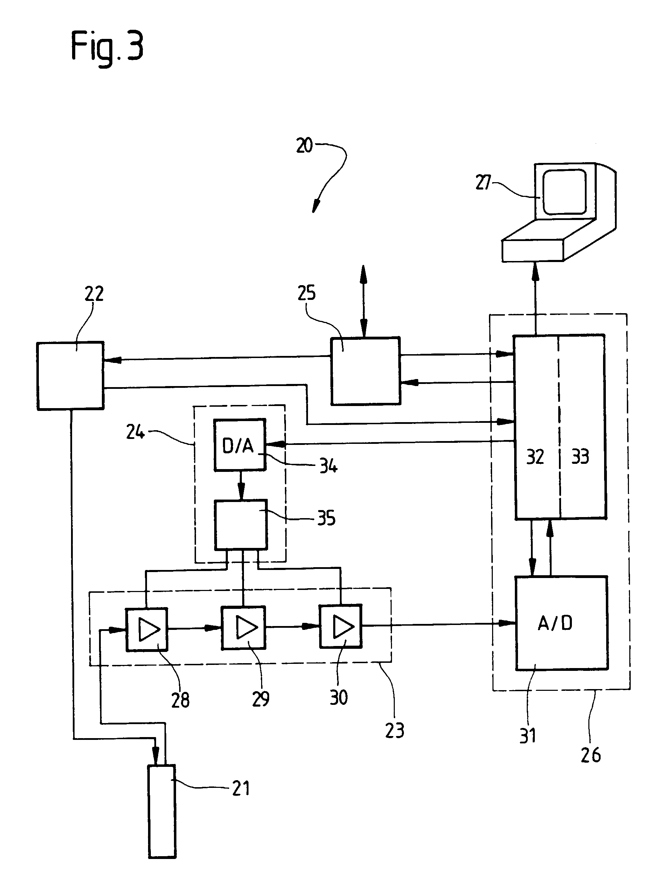

En se référant maintenant à la figure 3, on voit un appareil de mesure par ultrasons 20 comprenant :

Un transducteur ultrasonore 21, un circuit émetteur 22, un circuit récepteur 23, un circuit de contrôle de gain 24, un circuit d'entrée/sortie 25; des moyens de traitement 26 et des moyens d'affichage 27. Le transducteur ultrasonore 21 émet une onde ultrasonore et reçoit des échos provenant de la réflexion de cette onde ultrasonore.

Le circuit émetteur 22 fournit une impulsion électrique qui est transformée par le transducteur en un signal ultrasonore correspondant. Le circuit émetteur 22 comprend également une horloge (non représentée) qui fournit un signal définissant la fréquence de répétition du signal d'interrogation émis par le transducteur 21. La fréquence centrale des impulsions ultrasonores est choisie en fonction de l'application désirée. Elle peut par exemple être comprise entre 2 et 20 MHz.

Le circuit récepteur 23 reçoit le signal électrique délivré à partir du transducteur 21 correspondant aux échos ultrasonores reçus par le transducteur 21. Le circuit récepteur comprend trois étages d'amplification, 28, 29 et 30 reliés en cascade. Un gain de signal plus grand que celui obtenu avec un étage d'amplification similaire unique est ainsi obtenu (bien que dans d'autres modes de réalisation un seul étage d'amplification peut être utilisé). Le signal électrique reçu à partir du transducteur 21 est amplifié par chacun de ces étages 28, 29 et 30 de façon successive et le signal d'écho résultant est reçu par les moyens de traitement 26.

Les moyens de traitement comprennent un convertisseur analogique-numérique 31, des moyens de calcul 32 et des moyens de mémorisation 33. Le signal d'écho fourni par le circuit récepteur 23 est reçu par le convertisseur analogique-numérique 31 et est ensuite fourni au moyen de calcul 32. Le convertisseur analogique-numérique 31 peut être un produit du type STR 8100 de la société SONIX Inc (Springfield, VA, USA) qui est un convertisseur 8 bits analogique-numérique capable de réaliser jusqu'à 10⁸ conversions par seconde. Le dispositif de calcul 32 a un suiveur d'échos qui est utilisé de façon classique pour suivre la position temporelle de chaque écho élémentaire d'un groupe d'échos élémentaires du signal d'écho en liaison avec le signal ultrasonore émis. Cette position, c'est-à-dire en fait le retard dans chaque signal d'écho élémentaire provenant de l'impulsion ultrasonore émise, varie avec la distance entre le transducteur ultrasonore et l'interface mobile à partir de laquelle l'impulsion ultrasonore est réfléchie.

Pour réaliser ce suivi, le suiveur d'écho reçoit un signal d'horloge produit par l'horloge du circuit émetteur 22 et fournit au convertisseur analogique-numérique 31 un signal de retard pour débuter la numérisation du signal d'écho à un moment approprié. Le suiveur d'échos peut être du type à détection d'extremum (positif ou négatif) du signal d'écho numérisé. Cet extremum n'est pas la valeur correcte pour représenter le mouvement des parois mobiles puisque la distance entre deux points d'échantillonnage est égale à c/(2.f.) où c = 1540 m/sec. est la vitesse des ondes ultrasonores dans le milieu et f la fréquence d'échantillonnage qui est comprise entre 50 et 100 MHz. Ainsi on ne peut suivre le déplacement de l'écho que de façon approximative.

Selon une variante, le suiveur d'échos peut être du type à détection "crossover" tel que celui décrit dans le brevet EP-A-337 297 et EP-A-356 629.

Les moyens de calcul 32 qui sont de façon avantageuse un microprocesseur du type 80386 ou 80486, mettent en oeuvre le procédé de mesure de l'appareil 20 en liaison avec les moyens de mémorisation 33. Comme partie de ce procédé, les moyens de calcul 32 envoient une valeur numérique aux moyens de contrôle de gain 24, cette valeur numérique correspond au gain désiré du circuit récepteur 23. Le circuit récepteur 23 comprend un convertisseur numérique-analogique 34 et un circuit de signal de gain 35. Le convertisseur numérique-analogique 34 reçoit la valeur numérique provenant des moyens de calcul 32 et fournit un signal analogique correspondant au circuit de signal de gain 35 qui délivre alors des signaux appropriés sur les entrées de contrôle de gain de chaque étage d'amplification 28, 29 et 30.

Différents appareils périphériques peuvent être également ajoutés, tels que des moyens d'affichage 27, le circuit d'entrée/sortie 25 et des moyens d'impression (non représentés). Le circuit d'entrée/sortie 25 permet à un utilisateur de contrôler le fonctionnement de l'appareil de mesure 20 par l'intermédiaire, par exemple, d'un clavier où d'autres moyens d'entrées pour utilisateur. Le circuit d'entrée/sortie 25 peut être également relié à l'horloge du circuit émetteur 22 pour contrôler la fréquence de répétition du signal d'horloge provenant des moyens de calcul 32. Il peut également servir à synchroniser d'autres équipements de mesure tels qu'un sphygmomanomètre, un pléthysmographe ou un détecteur Doppler afin de mesurer la pression sanguine et la vitesse du sang.

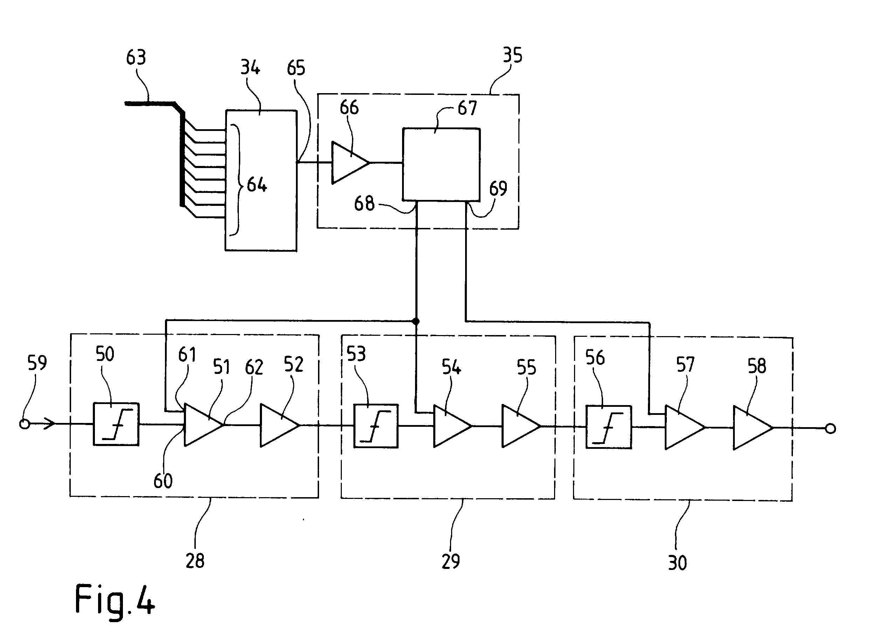

La figure 4 montre un schéma d'un circuit d'un mode de réalisation du circuit récepteur 23 et des moyens de contrôle de gain 24. L'étage d'amplification 28 comprend un limiteur d'amplitude 50, un amplificateur de signal 51 et un suiveur de tension 52. De façon similaire, l'étage d'amplification 29 comprend un limiteur d'amplitude 53, un amplificateur de signal 54 et un suiveur de tension 55 alors que l'étage d'amplification 30 comprend un limiteur d'amplitude 56, un amplificateur de signal 57 et un suiveur de tension 58.

Le signal électrique provenant du transducteur 21 est reçu sur une borne 59 de l'étage d'amplification 28 et est transmise à une entrée de signal 60 de l'amplificateur 51. Le limiteur 50 protège l'amplificateur 51 en écrêtant le signal électrique fourni à l'entrée 60 si son amplitude excède une limite prédéterminée. L'amplificateur 51 a également une entrée de gain 61 pour ajuster le niveau d'amplification du signal reçu sur son entrée de signal 60.

L'amplificateur 51 a une sortie 62 reliée au suiveur de tension 52 afin d'ajuster la sortie à haute impédance de l'amplificateur 51 à l'entrée à basse impédance de l'étage d'amplification suivant 29. La sortie du suiveur de tension 52 est reliée à l'entrée de l'étage d'amplification 29 dont la sortie est reliée à l'entrée de l'étage d'amplification suivant 30. Les étages d'amplification 29 et 30 sont fonctionnellement identiques au première étage d'amplification 28 et leur fonctionnement ne sera pas décrit ici en détail.

Chacun des amplificateurs 54 et 57 ont une entrée de gain, qui comme l'entrée de gain 61 de l'amplificateur 51 de l'étage d'amplification 28, détermine le niveau d'amplification du signal à l'entrée. Ces entrées de gain sont alimentées par le convertisseur numérique-analogique 34 par l'intermédiaire du circuit de signal de gain 35. Les moyens de calcul 32 fournissent une valeur numérique au convertisseur numérique-analogique 34 sur un bus de données à 8 bits 63. Cette valeur numérique correspond au gain désiré du circuit récepteur 23, et est reçue par le circuit numérique-analogique sur ses entrées 64. La valeur numérique est convertie en une tension analogique correspondante sur sa sortie 65.

Le circuit de signal de gain 35 comprend un amplificateur opérationnel 66 et un circuit diviseur de tension 67. L'amplificateur opérationnel 66 est configuré, de façon classique, comme un suiveur de tension si bien que la tension sur sa sortie est la même que celle qui apparaît sur la sortie 65 du convertisseur numérique-analogique 34. Le circuit diviseur de tension 67 a deux sorties 68 et 69, dont la première fournit un signal de gain à l'entrée de gain des amplificateurs 51 et 54 tandis que la dernière fournit un signal de gain à l'entrée de gain de l'amplificateur 57.

Les caractéristiques de transfert du circuit diviseur de tension 35 sont différentes selon ses sorties 68 et 69. Quand un signal de faible niveau est fourni à l'amplificateur 66, indiquant seulement qu'un faible niveau d'amplification doit être donné au signal sur la borne 59, la sortie 69 fournit un signal de gain d'un niveau approprié à l'amplificateur 57 tandis que la sortie 68 fournit seulement un signal de gain minimum aux amplificateurs 51 et 54. Puisque le signal sur la borne 59 est principalement amplifiée par l'amplificateur 57, la Distorsion Harmonique Totale du signal provenant des deux étages d'amplification précédents et ainsi du circuit récepteur en tant que tel, est limitée.

Le signal de gain provenant de la sortie 69 augmente avec le niveau d'amplification nécessaire du signal jusqu'à ce que ce dernier ne puisse plus être fourni par l'étage d'amplification 30 tout seul. Quand un niveau d'amplification plus élevé est nécessaire, le circuit diviseur de tension 67 provoque une augmentation du niveau du signal de gain qui provient de la sortie 68. L'amplification du signal par les amplificateurs 51 et 54 en combinaison avec l'amplificateur 57, fournissent le niveau approprié d'amplification du signal.

Le fonctionnement de l'appareil de mesure par ultrasons 20 pour déterminer le diamètre temporel interne et l'épaisseur des parois du vaisseau sanguin 3 va maintenant être décrit.

Avant de commencer les mesures en tant que telles, l'utilisateur choisit les paramètres de l'appareil tels que la fréquence de répétition et le type de transducteur, c'est-à-dire la fréquence centrale de l'impulsion ultrasonore. Ces paramètres peuvent être sélectionnés par l'intermédiaire d'un clavier relié au circuit d'entrée/sortie 25 ou automatiquement par des moyens de traitement 30 en fonction de l'application choisie par l'utilisateur. Par exemple, dans le cas de la mesure du diamètre interne et de l'épaisseur des parois d'un vaisseau sanguin, la fréquence de répétition est de l'ordre de 10 Hz à 5 kHz pour la mesure de l'artère carotide. La durée du retard transmis au convertisseur analogique-numérique 26 est aussi ajusté, soit manuellement soit automatiquement, de sorte que les échos élémentaires des signaux d'échos peuvent être placés dans la fenêtre temporelle et que chaque écho soit correctement suivi par le suiveur d'échos.

Les moyens d'affichage 27 peuvent être utilisés pour aider l'utilisateur dans la sélection de ces paramètres. En ajustant la durée du signal de retard envoyé vers le convertisseur analogique-numérique 31 pour commencer la numérisation du signal d'écho, une trace des échos élémentaires (numérisés) Eₐₙₜ et Eₚₒₛₜ peut être affichée pour aider l'utilisateur à positionner correctement le transducteur ultrasonore 21 par rapport au vaisseau sanguin.

Afin d'optimiser l'amplitude des échos élémentaires reçus par les moyens de traitement, les moyens de calcul 32 fournissent une valeur numérique sélectionnée sur le bus vers le convertisseur numérique-analogique 34. Cette valeur numérique, qui correspond à une amplitude optimisée du premier écho élémentaire Eₐₙₜ, est convertie en une tension analogique et utilisée par le circuit de signal de gain 35 pour ajuster le gain de chaque étage d'amplification 28, 29 et 30. Suite à l'émission de l'impulsion ultrasonore provenant du transducteur 21, les moyens de calcul 32 commandent le convertisseur analogique-numérique 31, après un retard sélectionné, pour qu'il commencent à numériser le signal d'écho. Les moyens de calcul 32 traitent chaque valeur numérique du signal d'écho numérisé, y compris le stockage temporaire dans les moyens de mémorisation 33, jusqu'à un point choisi entre les échos élémentaires Eₐₙₜ et Eₚₒₛₜ.

Entre le temps correspondant à ce point et l'émission de la prochaine impulsion ultrasonore provenant du transducteur 21, les moyens de calcul 32 fournissent une autre valeur numérique sur le bus de données 68. Cette valeur numérique correspond à une valeur optimisée de l'amplitude du deuxième écho élémentaire Eₚₒₛₜ. Comme cela vient d'être décrit ci-dessus, le convertisseur analogique-numérique 31 débute la numérisation du signal d'écho provenant de cette impulsion ultrasonore ultérieure après le retard sélectionné. Toutefois, le signal analogique provenant de la sortie du circuit récepteur 23 a une amplitude qui est maintenant optimisée par rapport au deuxième écho élémentaire Eₚₒₛₜ. Les moyens de calcul 22 au moment correspondant au point choisi sur le premier signal d'écho ci-dessus ou après ce moment, traitent les valeurs numériques de ce deuxième signal d'écho.

En résumé, l'amplitude de l'écho élémentaire Eₐₙₜ est optimisée dans un premier signal d'écho. L'amplitude de l'écho élémentaire Eₚₒₛₜ est alors optimisée dans un deuxième signal d'écho. Une partie du premier signal d'écho contenant l'écho élémentaire Eₐₙₜ et une partie du deuxième signal d'écho élémentaire Eₚₒₛₜ, sont traitées par les moyens de calcul. De cette façon, un signal d'écho "composite" est effectivement créé dans lequel l'amplitude des deux échos élémentaires est optimisée.

Le moment auquel les moyens de calcul cessent le traitement du premier signal d'écho et le moment auquel ils commencent le traitement du deuxième signal d'écho, peuvent être choisis par l'utilisateur. De façon pratique, le signal d'écho "composite" est montré à l'utilisateur par les moyens d'affichage 27 pour permettre une sélection convenable de ces moments. Les gains des premier et deuxième signaux d'écho peuvent être également choisis de cette façon. Toutefois, dans d'autres modes de réalisation, ces moments et ces gains de signaux d'écho peuvent être automatiquement choisis par les moyens de calcul 32. Différentes variantes peuvent être utilisées pour réaliser la présente invention. Par exemple, le convertisseur analogique-numérique 31 peut réaliser la numérisation que d'une partie sélectionnée du premier signal d'écho contenu dans l'écho élémentaire Eₐₙₜ et que d'une autre partie sélectionnée du deuxième signal d'écho contenant l'écho élémentaire Eₚₒₛₜ.

En outre, les moyens de calcul 32 peuvent être aptes à traiter toutes les valeurs numériques des premier et deuxième signaux d'écho. Par exemple, les premier et deuxième signaux d'écho peuvent être affichés ensemble par les moyens d'affichage 27. Toutefois, cela utiliserait davantage d'espace mémoire dans les moyens de mémorisation 33 que nécessaire et cela pourrait conduire à des confusions pour l'utilisateur.

Dans un autre mode de réalisation, l'amplitude des signaux d'écho peut être modifiée en ajustant l'amplitude de l'impulsion ultrasonore émise à partir du transducteur 21. Une telle solution peut ne pas être souhaitable dans des applications médicales car des impulsions ultrasonores plus puissantes pourraient entraîner des dommages sur les patients.

L'utilisateur peut alors procéder à la mesure de la position des interfaces du vaisseau sanguin en utilisant l'appareil 20 pour mettre en oeuvre le procédé de mesure décrit dans la demande de brevet suisse No 2871/91. Ce procédé de mesure ne sera pas décrit en détail, mais peut être divisé en trois étapes à savoir une étape d'initialisation, une étape d'assimilation et une étape de traitement. Au cours de l'étape d'initialisation, les valeurs numériques transférées et stockées dans les moyens de mémorisation 33 sont traitées afin de sélectionner un point de référence dans chaque écho élémentaire du signal d'écho, on détermine pour chaque écho élémentaire la position temporelle de chaque interface produisant cet écho élémentaire et on calcule pour chaque écho élémentaire l'intervalle temporelle entre la position du point de référence de cet écho élémentaire et la position temporelle de l'interface obtenue par le traitement.

Parallèlement a ce traitement se produit la phase d'assimilation au cours de laquelle les valeurs numériques résultant de la détection des signaux d'échos provenant d'impulsions ultrasonores ultérieures sont traitées afin de suivre la position temporelle des points de référence provenant de chaque signal d'écho.

Ensuite, suit la phase d'acquisition au cours de laquelle la positon temporelle de chaque interface correspondant à chaque écho élémentaire de chaque signal d'écho résultant des impulsions ultrasonores ultérieures à la phase d'acquisition sont suivies et mémorisées. Enfin, une étape d'exploitation se produit au cours de laquelle les données mémorisées dans la phase d'acquisition sont utilisées pour fournir des informations pour un utilisateur tel que l'affichage du diamètre du vaisseau sanguin en fonction du temps.

On comprendra que l'homme du métier peut utiliser l'invention en liaison avec la détection d'autres groupes d'échos (pour lesquels des gains différents sont nécessaires pour optimiser leurs amplitudes) reçus à partir de différentes interfaces et cette invention n'est pas limitée aux applications concernant la recherche d'échos élémentaires dans la détection d'échos provenant de parois d'un vaisseau sanguin comme cela vient d'être décrit.

Enfin, on comprendra que différentes modifications et/ou des additions peuvent être réalisées à l'appareil pour la mesure par ultrasons sans s'éloigner de l'étendue de la présente invention définie par les revendications annexées.

## Revendications

1. Appareil de mesure par ultrasons comprenant :
- un transducteur (21) pour émettre une impulsion ultrasonore à une fréquence de répétition prédéterminée et pour recevoir des échos réfléchis par une pluralité de groupes d'interfaces,
- un circuit émetteur (22) pour contrôler l'émission desdites impulsions ultrasonores,
- un circuit récepteur (23) pour produire un signal d'écho représentatif desdits échos produits par chacune desdites impulsions, chacun desdits signaux d'écho ayant une première partie correspondant aux échos provenant d'un groupe d'interfaces et une deuxième partie correspondant aux échos provenant d'un autre groupe d'interfaces,
- des moyens de contrôle de gain (24) pour contrôler l'amplitude de chacun desdits signaux d'écho,
- des moyens de traitement (26) pour recevoir et traiter lesdits signaux d'écho,
caractérisé en ce que lesdits moyens de traitement (26) sont aptes à traiter un signal d'écho composé comprenant la première partie d'un premier signal d'écho en combinaison avec la deuxième partie d'un signal d'écho ultérieur,
lesdits moyens de contrôle de gain (24) étant aptes à ajuster l'amplitude dudit premier signal d'écho à une première valeur pendant la durée dudit premier signal d'écho et l'amplitude dudit signal d'écho ultérieur à une deuxième valeur pendant la durée dudit signal d'écho ultérieur afin d'optimiser l'amplitude de la première partie dudit premier signal d'écho et la deuxième partie dudit signal d'écho ultérieur dans ledit signal d'écho composé traité par lesdits moyens de traitement.

2. Appareil de mesure par ultrasons selon la revendication 1, caractérisé en ce que ledit circuit récepteur (23) comprend un circuit d'amplification (28, 29, 30) ayant un gain ajustable,
ce dernier étant contrôlé par lesdits moyens de contrôle de gain (24).

3. Appareil de mesure par ultrasons selon la revendication 2, caractérisé en ce que ledit circuit d'amplification (28, 29, 30) comprend une pluralité d'étages d'amplification reliés en cascade.

4. Appareil de mesure par ultrasons selon la revendication 3, caractérisé en ce qu'un ou plusieurs desdits étages d'amplification (28, 29, 30) comprend un amplificateur (51, 54, 57) chacun ayant une entrée de signal (61a), une entrée de gain (61b) et une sortie, chacune desdites entrées de gain (61b) étant reliée audit moyen de contrôle de gain (24).

5. Appareil de mesure par ultrasons selon la revendication 4, caractérisé en ce que lesdits étages d'amplification (28, 29, 30) comprennent en outre un limiteur (50, 53, 56) relié à son entrée de signal, et un suiveur de tension (52, 55, 58) relié à sa sortie.

6. Appareil de mesure par ultrasons selon l'une quelconque des revendications précédentes, caractérisé en ce que lesdits moyens de contrôle de gain (24) comprennent un convertisseur numérique-analogique (34) et une alimentation en signal de gain (35),
ledit convertisseur numérique-analogique (34) recevant desdits moyens de traitement (26) une valeur numérique représentant une amplitude de signal d'écho sélectionnée et fournissant à ladite alimentation de signal de gain (35) un signal analogique correspondant à ladite amplitude sélectionnée.

7. Appareil de mesure par ultrasons selon la revendication 6, caractérisé en ce que ladite alimentation de signal de gain (35) a une première sortie (68) pour alimenter un ou plusieurs étages précédents, (28, 29) desdits étages d'amplification et une deuxième sortie pour alimenter un ou plusieurs étages ultérieurs (30) desdits étages d'amplification, ladite deuxième sortie fournissant un signal de gain plus grand que ladite première sortie à des niveaux d'amplification de signal d'écho faibles afin de réduire la Distorsion Harmonique Totale dudit circuit récepteur (23).

8. Appareil de mesure par ultrasons selon l'une quelconque des revendications précédentes, caractérisé en ce que lesdits moyens de traitement (26) comprennent un convertisseur analogique-numérique (31) pour numériser lesdits signaux d'écho en des valeurs numériques et des moyens de calcul (32) pour manipuler lesdites valeurs numériques.

## Patentansprüche

1. Ultraschallmeßgerät, umfasend:
- einen Wandler (21) zum Aussenden eines Ultraschallimpulses in einer vorgegebenen Wiederholfrequenz und zum Empfangen der von einer Mehrzahl von Grenzflächen-Gruppen reflektierten Echos:
- einen Sendeschaltkreis (22) zum Steuern der Aussendung der Ultraschallimpulse;
- einen Empfangsschaltkreis (23) zum Erzeugen eines für die von jedem der Impulse erzeugten Echos repräsentativen Echosignals, wobei jedes der Echosignale einen ersten Teil entsprechend den von einer Gruppe von Grenzflächen ausgehenden Echos und einen zweiten Teil entsprechend den von einer anderen Gruppe von Grenzflächen ausgehenden Echos umfaßt,
- Mittel zur Steuerung der Verstärkung (24) zum Steuern der Amplitude jedes Echosignals,
- Verarbeitungsmittel (26) zum Empfangen und Verarbeiten der Echosignale,
dadurch gekennzeichnet, daß die Verarbeitungsmittel (26) zur Verarbeitung eines zusammengesetzten Echosignals, das den ersten Teil eines ersten Echosignals in Kombination mit dem zweiten Teil eines späteren Echosignals umfaßt, ausgebildet sind,
wobei die Mittel zur Steuerung der Verstärkung (24) zum Anpassen der Amplitude des ersten Echosignals an einen ersten Wert während der Dauer des ersten Echosignals und der Amplitude des späteren Echosignals an einen zweiten Wert während der Dauer des späteren Echosignals ausgebildet sind, um die Amplitude des ersten Teils des ersten Echosignals und des zweiten Teils des späteren Echosignals in dem zusammengesetzten Echosignal, das von den Verarbeitungsmitteln verarbeitet wird, zu optimieren.

2. Ultraschallmeßgerät nach Anspruch 1, dadurch gekennzeichnet, daß der Empfangsschaltkreis (23) eine Verstärkerschaltung (28, 29, 30) mit einstellbarem Verstärkungsfaktor umfaßt,
wobei letztere von den Mitteln zur Steuerung der Verstärkung (24) gesteuert wird.

3. Ultraschallmeßgerät nach Anspruch 2, dadurch gekennzeichnet, daß die Verstärkerschaltung (28, 29, 30) eine Mehrzahl von kaskadegeschalteten Verstärkerstufen aufweist.

4. Ultraschallmeßgerät nach Anspruch 3, dadurch gekennzeichnet, daß eine oder mehrere der Verstärkerstufen (28, 29, 30) einen Verstärker (51, 54, 57) umfaßt, der jeweils einen Signaleingang (61a), einen Verstärkungseingang (61b) und einen Ausgang umfaßt, wobei jeder der Verstärkungseingänge (61b) mit den Mitteln zur Steuerung des Verstärkungsfaktors (24) verbunden ist.

5. Ultraschallmeßgerät nach Anspruch 4, dadurch gekennzeichnet, daß die Verstärkerstufen (28, 29, 30) ferner einen mit dem Signaleingang verbundenen Begrenzer (50, 53, 56) sowie einen mit seinem Ausgang verbundenen Spannungsfolger umfassen.

6. Ultraschallmeßgerät nach einem der vorhergehenden Ansprüche, dadurch gekennzeichnet, daß die Mittel zur Steuerung des Verstärkungsfaktors (24) einen Digital-Analog-Wandler (34) und eine Verstärkungssignalversorgung (35) umfassen,
wobei der Digital-Analog-Wandler (34) von den Verarbeitungsmitteln (26) einen für eine ausgewählte Echosignalamplitude repräsentativen digitalen Wert erhält und der Verstärkungssignalversorgung (35) ein der ausgewählten Amplitude entsprechendes analoges Signal abgibt.

7. Ultraschallmeßgerät nach Anspruch 6, dadurch gekennzeichnet, daß die Verstärkungssignalversorgung (35) einen ersten Ausgang (68) zum Versorgen einer oder mehrerer vorangehender Stufen (28, 29) der Verstärkerstufen und einen zweiten Ausgang zum Versorgen einer oder mehrerer nachfolgender Stufen (30) der Verstärkerstufen aufweist, wobei bei geringen Echosignalsverstärkungsniveaus der zweite Ausgang ein größeres Verstärkungssignal abgibt als der erste Ausgang, um die Gesamte Harmonische Distorsion des Empfangsschaltkreises (23) zu reduzieren.

8. Ultraschallmeßgerät nach einem der vorhergehenden Ansprüche, dadurch gekennzeichnet, daß die Verarbeitungsmittel (26) einen Analog-Digital-Wandler (31) umfassen, um die Echosignale in digitale Werte zu digitalisieren, und Berechnungsmittel (32) zum Manipulieren der digitalen Werte.

## Claims

1. Ultrasonic measuring apparatus comprising :
- a probe (21) for emitting an ultrasonic pulse at a predetermined repetition frequency and receiving echos reflected from a plurality of groups of interfaces,
- an emitter circuit (22) for controlling the emission of said ultrasonic pulses,
- a receiver circuit (23) for producing an echo signal representative of said echos produced by each of said pulses, each of said echo signals having a first portion corresponding to echos from one group of interfaces and a second portion corresponding to echos from another group of interfaces,
- gain control means (24) for controlling the amplitude of each of said echo signals,
- processing means (26) for receiving and treating said echo signals,
characterized in that said processing means (26) is adapted to treat a composite echo signal comprised of the first portion of a first echo signal combined with the second portion of a subsequent echo signal,
said gain control means (24) being adapted to set the amplitude of said first echo signal at a first value for the duration of said first echo signal and the amplitude of said subsequent echo signal at a second value for the duration of said subsequent echo signal, so as to optimize the amplitude of both the first portion of said first echo signal and the second portion of said subsequent echo signal in said composite echo signal when treated by said processing means.

2. Ultrasonic measuring apparatus according to claim 1, characterized in that said receiver circuit (23) comprises an amplifier circuit (28, 29, 30) having an adjustable gain,
the latter being controlled by said gain control means (24).

3. Ultrasonic measuring apparatus according to claim 2, characterized in that said amplifier circuit (28, 29, 30) comprises a plurality of amplifier stages connected in cascade.

4. Ultrasonic measuring apparatus according to claim 3, characterized in that one or more of said amplifier stages (28, 29, 30) comprises an amplifier (51, 54, 57) each having a signal input (61a), a gain input (61b) and an output, each said gain input (61b) being connected to said gain control means (24).

5. Ultrasonic measuring apparatus according to claim 4, characterized in that each of said one or more amplifier stages (28, 29, 30) further comprises a limiter (50, 53, 56) connected to its signal input, and a voltage follower (52, 55, 58) connected to its output.

6. Ultrasonic measuring apparatus according to any one of the preceding claims, characterized in that said gain control means (24) comprises a digital-analog converter (34), and a gain signal supply (35),
said digital-analog converter (34) receiving from said processing means (26) a digital value representing a selected echo signal amplitude, and supplying to said gain signal supply (35) an analog signal corresponding to said selected amplitude.

7. Ultrasonic measuring apparatus according to claim 6, characterized in that said gain signal supply (35) has a first output (68) for supplying one or more earlier stages (28, 29) of said amplifier stages and a second output for supplying one or more later stages (30) of said amplifier stages, said second output supplying a greater gain signal than said first output at low levels of echo signal amplification so as to reduce the Total Harmonic Distortion of said receiver circuit (23).

8. Ultrasonic measuring apparatus according to any one of the preceding claims, characterized in that said processing means (26) comprises an analog-digital converter (31) for digitizing said echo signals into digital values, and calculating means (32) for manipulating said digital values.
